# EUROPÄISCHE PATENTSCHRIFT

(11) **EP 4 463 334 B1**
(45) Veröffentlichungstag und Bekanntmachung des Hinweises auf die Patenterteilung: **13.05.2026**
(21) Anmeldenummer: 23700261.3
(22) Anmeldetag: 03.01.2023
(51) Int. Cl.: B60K 1/04, B62D 21/15

(54) **SCHUTZVORRICHTUNG EINES ELEKTRISCHEN ENERGIESPEICHERSYSTEMS EINES FAHRZEUGS**
PROTECTION DEVICE OF AN ELECTRICAL ENERGY STORAGE SYSTEM OF A VEHICLE
DISPOSITIF DE PROTECTION D'UN SYSTÈME DE STOCKAGE D'ÉNERGIE ÉLECTRIQUE D'UN VÉHICULE

(30) Priorität: 10.01.2022 DE 102022100343
(43) Veröffentlichungstag der Anmeldung: 20.11.2024
(73) Patentinhaber: MAN Truck & Bus SE, 80995 München (DE)
(72) Erfinder: WILKE, Florian, 88138 Weißensberg (DE)
(86) Internationale Anmeldenummer: PCT/EP2023/050037
(87) Internationale Veröffentlichungsnummer: WO 2023/131593

(56) Entgegenhaltungen:
- WO-A1-2020/120068
- DE-A1- 102015 201 881
- US-A1- 2019 359 265

## Beschreibung

### Technischer Hintergrund

Die Erfindung betrifft eine Schutzvorrichtung eines elektrischen Energiespeichersystems eines Fahrzeugs, insbesondere für Komponenten eines Hochvolt-Energiespeichersystems.

DE 102015201881 A1 beschreibt eine elektrische Verbindungseinrichtung für ein Gehäuseelement eines Gehäuses einer im Gehäuse angeordneten, internen elektrischen Einrichtung, insbesondere einer Traktionsbatterie für ein elektrisch antreibbares Fahrzeug.

US 2019/0359265 A1 beschreibt eine Unterstruktur einer Fahrzeugkarosserie, die ein Paar linker und rechter Seitenschweller, einen Batteriesatz und eine Trennwand umfasst. Der Seitenschweller ist unterhalb eines Seitenabschnitts einer Fahrzeugkarosserie angeordnet und erstreckt sich in einer Vorwärts-/Rückwärtsrichtung der Fahrzeugkarosserie. Die Trennwand ist innerhalb der Seitenschweller angeordnet und verstärkt einen Querschnitt der Seitenschweller von innen.

WO 2020/120068 A1 beschreibt eine Energiespeicher-Bodengruppe für einen Kraftwagenrohbau. Die Energiespeicher-Bodengruppe umfasst wenigstens ein rohbaumäßig nichttragendes Gehäuse des Energiespeichers und wenigstens einen zusätzlichen, oberseitig des Fahrzeugbodens angeordneten Längs- oder Querträger zum Aussteifen der Bodengruppe.

### Kurzfassung der Erfindung

Um einen Ladevorgang eines elektrischen Energiespeichersystems eines Nutzfahrzeugs intuitiv zu gestalten und somit zu vereinfachen, kann bei einer Batterie eines Nutzfahrzeugs eine an der Außenseite des Nutzfahrzeugs vorgesehene Ladeanschlusseinheit benachbart zur Batterie angeordnet werden, beispielsweise in einem Bereich am Nutzfahrzeug, wo herkömmlich ein Tankstutzen eingebaut ist. Die Ladeanschlusseinheit ist mit einer Ladeschützeinheit verbunden, die fahrzeuginnenseitig von der Ladeanschlusseinheit angeordnet ist und beispielsweise den Ladeanschluss elektrisch mit einem elektrischen Verteiler verbindet, über den dann die Batterie geladen werden kann. An der der Ladeschützeinheit zugewandten Seite der Batterie kann beispielsweise an der Batterie eine Anschlusseinheit angeordnet sein, auch als Battery Junction Box, BJB, bezeichnet.

Es ist wünschenswert, im Falle eines Unfalls, insbesondere eines Seitenaufpralls, einen Kurzschluss des elektrischen Energiespeichersystems möglichst zu verhindern. Dies dient insbesondere bei einem Hochvolt-Energiespeichersystem zum einen dem Berührungsschutz für Nutzer oder Unfallhelfer, damit diese nicht durch Berühren einer ungewollt spannungsführenden Fahrzeugkomponente einen elektrischen Schlag erfahren. Dies dient aber auch der Vermeidung eines thermischen Ereignisses, wie beispielsweise einem Brand oder einer Explosion. Als Schutzmaßnahme ist neben einem automatischen Abschalten des Energiespeichersystems oder einem automatischen Abschalten der Energieversorgung durch das elektrische Energiespeichersystem auch ein mechanischer Schutz, insbesondere ein Aufprallschutz, wünschenswert.

Aufgabe der Erfindung ist es, ein elektrisches Energiespeichersystem sowie die Ladeeinheit eines Fahrzeugs möglichst gegen das Auftreten eines Kurzschlusses im Fall eines Seitenaufpralls zu schützen.

Die Aufgabe wird erfindungsgemäß gelöst durch eine mechanische Schutzvorrichtung eines elektrischen Energiespeichersystems eines Fahrzeugs, umfassend:
eine Schutzplanke für eine Batterie des Energiespeichersystems, zum Anordnen an der fahrzeugäußeren Seite der Batterie und sich in Fahrzeuglängsrichtung und vertikal entlang der Batterie erstreckend,
einen Einbaurahmen für eine von der Batterie getrennt angeordnete Ladeanschlusseinheit des Energiespeichersystems, zum Anordnen in Fahrzeuglängsrichtung vor einem sich in vertikaler Richtung erstreckenden Ende der Schutzplanke und beabstandet von dem Ende der Schutzplanke,
wobei der Einbaurahmen eine Anlagefläche zum Anordnen in Fahrzeuglängsrichtung vor dem Ende der Schutzplanke und entlang des Endes der Schutzplanke aufweist, wobei die Anlagefläche einen außenseitigen, abgewinkelten Anschlag zum außenseitigen beabstandeten Umgreifen des Endes der Schutzplanke aufweist, wobei die Anlagefläche zusammen mit dem außenseitigen Anschlag einen im Querschnitt L-förmigen Bereich der Anlagefläche umfasst.

Eine Grundidee der Erfindung ist es, die Anlagefläche vorzusehen zum Auffangen und Abstützen des von dem Einbaurahmen beabstandeten Endes der Schutzplanke bei einer Annäherung von Einbaurahmen und Schutzplanke in Fahrzeuglängsrichtung, verursacht durch einen Unfall. Im Normalbetrieb ist die Schutzplanke beabstandet von dem Einbaurahmen. Dies dient dazu, die Ladeanschlusseinheit schwingungstechnisch von der Batterie zu entkoppeln. Indem bei einer Annährung die Anlagefläche das Ende der Schutzplanke in Fahrzeuglängsrichtung auffängt, kann ein Eindringen des Einbaurahmens, der Ladeanschlusseinheit und/oder eines hinter dem Einbaurahmen angeordneten Ladeschützes in den Bauraum der Batterie und/oder eines an der Batterie angeordneten Anschlusseinheit (Battery Junction Box) verhindert oder begrenzt werden. Beispielsweise kann eine gegenseitige Annäherung des Einbaurahmens, der Ladeanschlusseinheit und/oder des Ladeschützes einerseits und der Batterie und/oder der Anschlusseinheit begrenzt werden und/oder eine Kollision verhindert werden. Der außenseitige Anschlag umgreift dabei das Ende der Schutzplanke und verhindert so ein Abrutschen des Endes der Schutzplanke von der Anschlagfläche nach außen. Somit unterstützt der außenseitige Anschlag das Auffangen des Endes der Schutzplanke im Falle eines Unfalls, bei dem Verformungskräfte auch in Fahrzeuglängsrichtung auftreten, beispielsweise im Falle eines schrägen Seitenaufpralls auf den Einbaurahmen. Beim Auffangen des Endes der Schutzplanke erfolgt eine Abstützung des Einbaurahmens an dem Ende der Schutzplanke sowohl in Fahrzeuglängsrichtung als auch in Fahrzeugquerrichtung. Die Anlagefläche mit dem außenseitigen Anschlag bildet somit einen Verhakungsbereich zum Auffangen des Endes der Schutzplanke.

Die Schutzvorrichtung kann insbesondere eine Aufprallschutzvorrichtung sein. Die beschriebene Auffangwirkung kann auch im Falle eines Alleinunfalls eintreten. Die mechanische Schutzvorrichtung eines Energiespeichersystems eines Fahrzeugs kann insbesondere eine Schutzvorrichtung eines Hochvolt-Energiespeichersystems eines Fahrzeugs sein. Die Batterie kann auch als elektrischer Energiespeicher bezeichnet werden.

Der Einbaurahmen ist vorzugsweise ein Einbaurahmen zum Halten der von der Batterie getrennt angeordnete Ladeanschlusseinheit des Energiespeichersystems.

Die Anlagefläche kann auch als Auffangfläche bezeichnet werden. Die Anlagefläche kann zum Begrenzen einer gegenseitigen Annäherung des Endes der Schutzplanke und der Anlagefläche (insbesondere im Falle eines Aufpralls oder Unfalls) in Fahrzeuglängsrichtung eingerichtet sein. Die Anlagefläche ist insbesondere zur beabstandeten Anordnung vor dem Ende der Schutzplanke eingerichtet. Der außenseitige Anschlag ist insbesondere zur beabstandeten Anordnung außenseitig von dem Ende der Schutzplanke eingerichtet und/oder überlappend mit einem das Ende umfassenden Endabschnitt der Schutzplanke. Der außenseitige Anschlag kann zum Begrenzen einer gegenseitigen Annäherung des vorderen Endes der Schutzplanke und des Anschlags in Fahrzeugquerrichtung eingerichtet sein.

Die Anlagefläche wird vorzugsweise gebildet durch eine Oberfläche eines Profilelements, das sich in vertikaler Richtung erstreckt. Das Profilelement ist vorzugsweise starr und/oder fest mit dem Einbaurahmen verbunden und/oder integral mit dem Einbaurahmen ausgebildet. Die Anlagefläche kann als Fangstruktur für das dem Einbaurahmen zugewandte Ende der Schutzplanke bezeichnet werden. Die Anlagefläche umfasst vorzugweise einen sich in Fahrzeugquerrichtung erstreckenden Basisabschnitt und den sich quer dazu in Fahrzeuglängsrichtung erstreckenden außenseitigen Anschlag und ggf. einen sich quer zum Basisabschnitt erstreckenden innenseitigen Anschlag.

Das Anordnen des Einbaurahmens beabstandet von dem Ende der Schutzplanke beinhaltet, dass der Einbaurahmen getrennt von der Schutzplanke und deren Ende angeordnet ist und mit Abstand von dem Ende der Schutzplanke angeordnet ist. Das außenseitige beabstandete Umgreifen des Endes der Schutzplanke durch den außenseitigen Anschlag der Anlagefläche beinhaltet, dass der außenseitige Anschlag getrennt von der Schutzplanke und von deren Ende angeordnet ist und mit Abstand außen neben einem Endabschnitt der Schutzplanke angeordnet ist, wobei der Endabschnitt das Ende der Schutzplanke umfasst. Die Anlagefläche ist vorzugweise dazu eingerichtet, in einem von der Anlagefläche mit dem außenseitigen Anschlag aufgespannten Raum das Ende der Schutzplanke aufzunehmen oder zumindest einen wesentlichen Abschnitt des Endes aufzunehmen.

Die mechanische Schutzvorrichtung ist vorzugweise eingerichtet zum Anordnen an dem Energiespeichersystem und/oder an dem Fahrzeug in einer Einbaukonfiguration der mechanischen Schutzvorrichtung. In einer Einbaukonfiguration der Schutzvorrichtung an dem Energiespeichersystem und/oder an dem Fahrzeug ist die Schutzplanke an der fahrzeugäußeren Seite der Batterie des elektrischen Energiespeichersystems angeordnet und erstreckt sich in Fahrzeuglängsrichtung und vertikal entlang der Batterie. In der Einbaukonfiguration ist der Einbaurahmen in Fahrzeuglängsrichtung vor dem sich in vertikaler Richtung erstreckenden Ende der Schutzplanke angeordnet und ist beabstandet von dem Ende der Schutzplanke angeordnet. In der Einbaukonfiguration ist die Anlagefläche des Einbaurahmens in Fahrzeuglängsrichtung vor dem Ende der Schutzplanke und entlang des sich in vertikaler Richtung erstreckenden Endes der Schutzplanke angeordnet, insbesondere beabstandet von dem Ende der Schutzplanke. In der Einbaukonfiguration umgreift der außenseitige Anschlag der Anlagefläche beabstandet das Ende der Schutzplanke. In der Einbaukonfiguration greift vorzugweise das Ende der Schutzplanke in den von der Anlagefläche mit dem außenseitigen Anschlag aufgespannten Raum ein und/oder ist darin angeordnet. In der Einbaukonfiguration ist vorzugsweise die Ladeanschlusseinheit an dem Einbaurahmen gehalten. An dem Fahrzeug ist die Ladeanschlusseinheit getrennt und beabstandet von der Batterie angeordnet.

Die Anlagefläche des Einbaurahmens ist vorzugsweise an einem (in der Einbaukonfiguration dem Ende der Schutzplanke zugewandten) Rand des Einbaurahmens angeordnet und erstreckt sich vertikal. Der im Querschnitt L-förmige Bereich der Anlagefläche erstreckt sich vorzugsweise vertikal. Vorzugsweise erstreckt sich in der Einbaukonfiguration der im Querschnitt L-förmige Bereich der Anlagefläche entlang eines wesentlichen Anteils der Höhe (d.h., der vertikalen Länge) des Endes der Schutzplanke. Vorzugsweise verläuft die Anlagefläche und/oder der im Querschnitt L-förmige Bereich der Anlagefläche entlang des Endes der Schutzplanke.

Das Ende der Schutzplanke kann ein vorderes Ende oder ein hinteres Ende der Schutzplanke sein. Die Begriffe "vorderes Ende" oder "hinteres Ende" sind hier auf die Fahrzeuglängsrichtung bezogen.

Die Ladeanschlusseinheit kann einen Ladeanschluss für externe Energiezufuhr umfassen zum Laden der elektrischen Batterie (d.h., für Energiezufuhr von extern bzw. zum Laden von extern, also von außerhalb des Fahrzeugs).

Vorzugsweise ist die Schutzplanke aus Metall, beispielsweise aus Stahlblech. Vorzugsweise umfasst die Schutzplanke ein gewelltes oder gefaltetes Profil mit sich in Fahrzeuglängsrichtung erstreckenden äußeren Profilbereichen, in Fahrzeuglängsrichtung erstreckenden inneren Profilbereichen und diese verbindenden Profilbereichen. Die Schutzplanke kann somit verformbar sein unter Energieabsorption und unter Wahrung des Zusammenhalts. Im Falle eines Unfalls kann Energie durch Verformungsarbeit absorbiert werden. Das Profil kann als eine stauchbare Struktur bezeichnet werden. Die Schutzplanke kann ein plattenförmiges Teil umfassen. Das plattenförmige Teil kann das gewellte oder gefaltete Profil sein oder umfassen. Das plattenförmige Teil kann außerdem eine Platte umfassen, insbesondere eine fahrzeuginnenseitig vom Profil angeordnete Platte.

In Ausführungsformen weist der Einbaurahmen einen Einbauraum zum Aufnehmen der Ladeanschlusseinheit auf. Die Ladeanschlusseinheit kann beispielsweise durch einen sie umgebenden Einbaurahmen geschützt sein.

In Ausführungsformen weist die Schutzplanke eine Auskragung auf, die eingerichtet ist, bei der Anordnung der Schutzplanke an der fahrzeugäußeren Seite der Batterie in einem über die Batterie hinausragenden Abschnitt der Schutzplanke fahrzeuginnenseitig vor der Batterie vorzustehen. Die Auskragung kann dazu eingerichtet sein, sich an der Batterie in Fahrzeuglängsrichtung abzustützen, beispielsweise im Falle einer gegenseitigen Annährung der Auskragung und des Energiespeichers. Indem die Auskragung fahrzeuginnenseitig vor der Batterie vorsteht, kann sie im Falle eines Unfalls ein Einwärtsbiegen des überstehenden Abschnitts der Schutzplanke verhindern und/oder begrenzen.

Die Auskragung kann eine Versteifung und/oder Verstärkung der Schutzplanke in dem über die Batterie hinausragenden Abschnitt bilden. Die Auskragung kann wenigstens eine Versteifungsrippe umfassen, wobei die Versteifungsrippe an einer Innenseite der Schutzplanke vorsteht. Die Auskragung kann eine Platte umfassen, die an mehreren der Versteifungsrippen abgestützt ist. Die Versteigungsrippe kann dreiecksförmig sein. Bei der genannten Anordnung der Schutzplanke kann eine Seite des Dreiecks entlang einer Seite der Batterie verlaufen. Es kann ein Spalt zwischen der Auskragung und der Seite der Batterie gebildet sein. Die Platte kann mit den Versteifungsrippen verschweißt sein. Die Auskragung kann mit einem plattenförmigen Teil der Schutzplanke verschweißt sein.

Vorzugsweise bildet die Auskragung eine Verstärkung des über die Batterie hinausragenden Abschnitts der Schutzplanke bildet.

In Ausführungsformen weist die Anlagefläche ferner einen innenseitigen, abgewinkelten Anschlag für das Ende der Schutzplanke auf.

Beim Auffangen des Endes der Schutzplanke erfolgt eine Abstützung des Einbaurahmens an dem Ende der Schutzplanke sowohl in Fahrzeuglängsrichtung als auch in Fahrzeugquerrichtung. Die Anlagefläche mit dem innenseitigen Anschlag und dem außenseitigen Anschlag bildet somit einen Verhakungsbereich zum Auffangen des Endes der Schutzplanke.

Die Anlagefläche kann zusammen mit dem innenseitigen Anschlag und dem außenseitigen Anschlag einen im Querschnitt U-förmigen Bereich der Anlagefläche umfassen. Die Schenkel des im Querschnitt U-förmigen Bereichs werden durch den innenseitigen und den außenseitigen Anschlag der Anlagefläche gebildet. Schenkel des U können dabei unterschiedlich lang sein, entsprechend unterschiedlichen Längen der innenseitigen und außenseitigen Anschläge in Fahrzeuglängsrichtung. In Ausführungsformen ist der innenseitige Anschlag in Fahrzeuglängsrichtung kürzer als der außenseitige Anschlag.

Vorzugsweise erstrecken sich der innenseitige Anschlag und der außenseitige Anschlag nebeneinander entlang des Endes der Schutzplanke. Vorzugsweise sind der innenseitige und der außenseitige Anschlag angeordnet, um das Ende der Schutzplanke beidseitig zu umgreifen. Die Anlagefläche ist vorzugweise dazu eingerichtet, in einem von der Anlagefläche mit dem innenseitigen und dem außenseitigen Anschlag aufgespannten Raum das Ende der Schutzplanke aufzunehmen oder zumindest einen wesentlichen Abschnitt des Endes aufzunehmen. In der Einbaukonfiguration umgreifen vorzugweise der innenseitige und der außenseitige Anschlag das Ende der Schutzplanke beidseitig. Mit anderen Worten, das Ende der Schutzplanke ist im von dem innenseitigen und dem außenseitigen Anschlag aufgespannten Raum angeordnet. Im Falle eines Unfalls kann es zu einem formschlüssigen Kontakt zwischen der Anlagefläche und dem Ende der Schutzplanke kommen. Dadurch kann das Ende der Schutzplanke aufgefangen und abgestützt werden. Sobald Der Kontakt stellt sich jedoch erst im Kollisionsfall (Crashlastfall) ein. Im Normalbetrieb ist der Kontakt offen, d.h. die Schutzplanke ist beabstandet von dem Einbaurahmen. Dies dient dazu, die Ladeanschlusseinheit schwingungstechnisch von der Batterie zu entkoppeln.

In bevorzugsten Ausführungsformen ist der Einbaurahmen aus Metalldruckguss gefertigt. Dies bewirkt eine hohe Stabilität im Falle eines Unfalls.

Gemäß einem weiteren Aspekt der Erfindung wird die Aufgabe gelöst durch ein Energiespeichersystem für ein Fahrzeug, umfassend eine Batterie, eine Ladeanschlusseinheit, eine Ladeschützeinheit, und eine mechanische Schutzvorrichtung nach einem der vorstehenden Ansprüche,
wobei die Schutzplanke an einer fahrzeugäußeren Seite der Batterie angeordnet ist und sich in Fahrzeuglängsrichtung und vertikal entlang der Batterie erstreckt,
wobei die Ladeanschlusseinheit an dem Einbaurahmen montiert ist und die Ladeschützeinheit eingerichtet ist zur Anordnung fahrzeuginnenseitig von der Ladeanschlusseinheit und beabstandet von der Batterie.

Das Energiespeichersystem kann insbesondere ein Hochvolt-Energiespeichersystem sein.

Die Ladeschützeinheit kann beispielsweise eingerichtet sein zur Anordnung am Einbaurahmen und/oder fahrzeuginnenseitig vom Einbaurahmen.

Die Schutzvorrichtung ist insbesondere eine Schutzvorrichtung für die Batterie und die Ladeschützeinheit.

Vorzugsweise umfasst das Energiespeichersystem eine Anschlusseinheit, Leistungsschalteinheit und/oder Steuereinheit, die an der Batterie angeordnet und an der Batterie befestigt ist. Dabei ist die Ladeschützeinheit eingerichtet zur Anordnung beabstandet von der Batterie und der Anschlusseinheit, Leistungsschalteinheit und/oder Steuereinheit und fahrzeuginnenseitig von der Ladeanschlusseinheit. Die Anschlusseinheit, Leistungsschalteinheit und/oder Steuereinheit kann beispielsweise an der Batterie mechanisch fixiert sein.

Gemäß einem weiteren Aspekt der Erfindung wird die Aufgabe gelöst durch einen Fahrzeugrahmenträger mit einem an dem Fahrzeugrahmenträger montierten Energiespeichersystem und mit einer mechanischen Schutzvorrichtung der oben beschriebenen Art,
wobei der Fahrzeugrahmenträger einen Rahmenlängsträger und einen Halter oder Kotflügelträger umfasst, der am Rahmenlängsträger befestigt ist,
wobei das Energiespeichersystem eine Batterie, eine Ladeanschlusseinheit und eine Ladeschützeinheit umfasst,
wobei die Batterie des Energiespeichersystems an dem Rahmenlängsträger befestigt ist, wobei die Schutzplanke der mechanischen Schutzvorrichtung an einer fahrzeugäußeren Seite der Batterie angeordnet ist und sich in Fahrzeuglängsrichtung und vertikal entlang der Batterie erstreckt,
wobei die Ladeschützeinheit des Energiespeichersystems und der Einbaurahmen der mechanischen Schutzvorrichtung an dem Halter oder Kotflügelträger befestigt sind, wobei die Ladeanschlusseinheit an dem Einbaurahmen montiert ist, wobei die Ladeschützeinheit fahrzeuginnenseitig von der Ladeanschlusseinheit angeordnet ist,
wobei die Batterie getrennt und beabstandet von der Ladeschützeinheit, von dem Einbaurahmen und von der Ladeanschlusseinheit angeordnet ist, und
wobei die Anlagefläche des Einbaurahmens in Fahrzeuglängsrichtung beabstandet vor dem Ende der Schutzplanke und entlang des sich in vertikaler Richtung erstreckenden Endes der Schutzplanke angeordnet ist und der außenseitige Anschlag der Anlagefläche beabstandet das Ende der Schutzplanke umgreift.

Der Einbaurahmen ist somit über den Halter oder Kotflügelträger an dem Rahmenlängsträger befestigt und ist insbesondere getrennt von und mit Abstand zu der Schutzplanke an dem Rahmenlängsträger befestigt.

Beispielsweise kann die Ladeschützeinheit fahrzeuginnenseitig vom Einbaurahmen angeordnet sein und/oder an dem Einbaurahmen montiert sein.

Das Energiespeichersystem kann insbesondere das oben beschriebene Energiespeichersystem sein, insbesondere ein Hochvolt-Energiespeichersystem.

Die mechanische Schutzvorrichtung kann insbesondere in der genannten Einbaukonfiguration an dem Fahrzeugrahmenträger und/oder dem Energiespeichersystem angeordnet sein.

Die Batterie ist insbesondere getrennt und beabstandet von dem Halter oder Kotflügelträger angeordnet.

Vorzugsweise ist ein Abstand der Energiespeichereinheit von der Ladeschützeinheit größer als ein Abstand des Endes der Schutzplanke von der Anlagefläche des Einbaurahmens.

Der Halter der Ladeeinheit kann ein Kotflügelträger sein.

Vorzugsweise ist das Ende der Schutzplanke in einem von der Anlagefläche des Einbaurahmens mit dem außenseitigen Anschlag aufgespannten Raum angeordnet.

In Ausführungsformen ist der Einbaurahmen zumindest an einer ersten Stützposition des Einbaurahmens an dem Halter oder Kotflügelträger befestigt. Der Einbaurahmen kann über wenigstens eine diagonale Stützstrebe an einer zweiten Stützposition des Einbaurahmens an dem Halter oder Kotflügelträger befestigt sein.

Die Stützstrebe kann auch als Diagonalstrebe bezeichnet werden.

Die Stützstrebe verläuft diagonal, d.h. diagonal zur Fahrzeuglängsrichtung bzw. diagonal zum Rahmenlängsträger.

Gemäß einem weiteren Aspekt der Erfindung wird die Aufgabe gelöst durch ein Fahrzeug mit einem Fahrzeugrahmenträger der oben beschriebenen Art.

Das Fahrzeug umfasst das an dem Fahrzeugrahmenträger montierte Energiespeichersystem und die mechanische Schutzvorrichtung. Das Fahrzeug kann insbesondere ein Nutzfahrzeug sein.

### Kurzbeschreibung der Zeichnungen

Die Erfindung wird im Folgenden anhand von Figuren im Detail beschrieben. In den Figuren zeigt:
- Fig. 1: eine schematische Darstellung eines Fahrzeugrahmenträgers eines Fahrzeugs, mit einem Energiespeichersystem und einer mechanischen Schutzvorrichtung gemäß Ausführungsformen der vorliegenden Offenbarung;
- Fig. 2: eine schematische perspektivische Darstellung eines Beispiels der mechanischen Schutzvorrichtung gemäß Ausführungsformen der Erfindung;
- Fig. 3: eine schematische Teildarstellung der mechanischen Schutzvorrichtung; und
- Fig. 4: eine schematische Querschnittsansicht eines Teils einer mechanischen Schutzvorrichtung gemäß Ausführungsformen der Erfindung.

### Detaillierte Beschreibung

Im Folgenden werden, sofern nicht anders vermerkt, für gleiche und gleichwirkende Elemente dieselben Bezugszeichen verwendet.

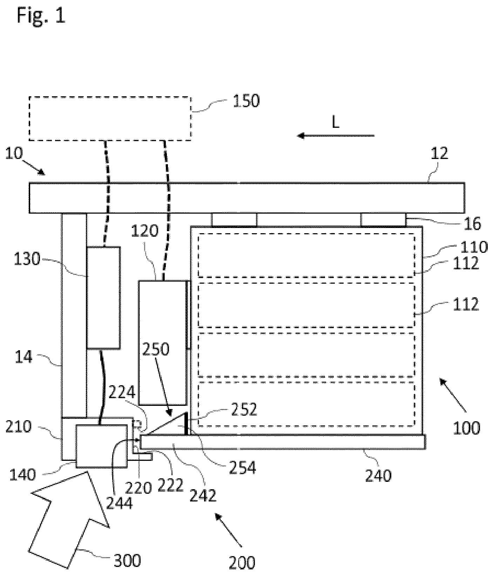

Fig. 1 zeigt eine schematische Darstellung eines Teils eines Fahrzeugs mit einem teilweise dargestellten Fahrzeugrahmenträger 10, einen Energiespeichersystem 100 und einer mechanischen Schutzvorrichtung 200 in einer Draufsicht.

Der Fahrzeugrahmenträger 10 umfasst einen Rahmenlängsträger 12 und einen daran befestigten Halter 14 in Form eines Kotflügelträgers. Dargestellt ist ein Abschnitt eines linken Rahmenlängsträgers 12. Der Rahmenlängsträger 12 kann Teil eines Leiterrahmens des Fahrzeugrahmenträgers 10 sein.

Das Energiespeichersystem 100 umfasst eine Batterie 110, die beispielsweise mehrere Batteriemodule 112 umfasst. Das Energiespeichersystem ist beispielsweise ein Hochvolt-Energiespeichersystem mit eine Batteriespannung im Bereich von 800 Volt.

Die Batterie 110 ist über rahmenseitige Halter 16 an dem Rahmenlängsträger 12 befestigt. Beispielsweise ist die Batterie 110 an den Haltern 16 eingeklinkt.

An der Batterie 110 ist eine Steuereinheit 120 befestigt, die auch als Battery Injunction Box bezeichnet wird und zugleich die Funktion einer Leistungsschalteinheit und Anschlusseinheit der Batterie übernimmt. Die einzelnen Batteriemodule 112 sind direkt mit der Steuereinheit 120 verbunden. Die Steuereinheit 120 umfasst weiter einen Hochvoltanschluss (plus und minus) sowie einen Steuerbusanschluss in Form eines CAN-Busanschlusses.

Das Energiespeichersystem 100 umfasst weiter eine Ladeschützeinheit 130 und eine Ladeanschlusseinheit 140. Die Ladeschützeinheit 130 und die Steuereinheit 120 sind beispielsweise über Kabel mit einem zentralen HV-Verteiler (Hochvolt-Verteiler) 150 des Energiespeichersystems 100 verbunden. Die Ladeschützeinheit 130 ist über ein Kabel mit der Ladeanschlusseinheit 140 verbunden. Die Ladeanschlusseinheit 140 umfasst eine Ladedose zum Anschließen eines externen Ladesteckers zum Laden der Batterie 110. Die Ladeschützeinheit 130 ist dazu eingerichtet, die Ladeanschlusseinheit 140 mit dem zentralen HV-Verteiler 150 zu verbinden, wenn an die Ladeanschlusseinheit 140 ein externer Ladestecker angeschlossen ist, d.h. in die Ladedose eingesteckt ist. Im Normalbetrieb, also ohne angeschlossenen Ladestecker, ist die Ladeanschlusseinheit 140 durch die Ladeschützeinheit 130 von dem Hochvolt-Netz des Energiespeichersystems 100 getrennt.

Die Ladeschützeinheit 130 ist an dem Halter 14 befestigt. Die Ladeanschlusseinheit 140 ist über einen Einbaurahmen 210 der Schutzvorrichtung 200 ebenfalls an dem Träger 14 befestigt. Die Ladeanschlusseinheit 140 und die Ladeschützeinheit 130 sind somit separat von der Batterie 110 und der Steuereinheit 120 nur über den Halter 14 mit dem Rahmenlängsträger 12 verbunden. Sie sind somit mechanisch entkoppelt. Sie sind voneinander beabstandet angeordnet. Wie schematisch in Fig. 1 dargestellt, ist die Ladeanschlusseinheit 140 in einem Einbauraum des Einbaurahmens 210 aufgenommen, wobei der Einbaurahmen 210 den Einbauraum auf mehreren Seiten umgibt.

Die Schutzvorrichtung 200 umfasst weiter eine Schutzplanke 240, die außenseitig an der Fahrzeuglängsseite der Batterie 110 befestigt ist und sich im wesentlichen über die Außenseite der Batterie 110 in horizontaler Richtung (in Fahrzeuglängsrichtung L) und in vertikaler Richtung erstreckt. Im gezeigten Beispiel ragt die Schutzplanke 240 nach vorne über die Batterie 110 hinaus. In dem überstehenden Bereich 242 ist innenseitig an der Schutzplanke 240 eine dreieckige Stützstruktur in Form einer Auskragung 250 befestigt. Im Normalbetrieb ist die Auskragung 250 durch einen Spalt an einer Seite der Dreiecksform von der vorderen Seite der Batterie 110 getrennt. Fig. 1 zeigt schematisch den Aufbau der Auskragung 250 mit einer vertikalen Platte 252 und dreieckigen Versteifungsrippen 254, an denen sich die Platte 252 abstützt. Es sind mehrere Versteifungsrippen 254 übereinander angeordnet, die jeweils mit der Platte 252 verbunden sind.

An dem Einbaurahmen 210 ist vor dem vorderen Ende 244 der Schutzplanke 240 eine Anlagefläche 220 mit einem außenseitigen Anschlag 222 ausgebildet. Die Anlagefläche 220 ist in ihrem Hauptteil in Fahrzeuglängsrichtung L von dem vorderen Ende 244 der Schutzplanke 240 beabstandet. Die Anlagefläche 220 mit dem außenseitigen Anschlag 222 ist im Querschnitt L-förmig und spannt einen Raum auf, in dem, wie dargestellt, das vordere Ende 244 der Schutzplanke 240 aufgenommen ist. Die Anlagefläche 220 und das vordere Ende 244 der Schutzplanke 240 erstrecken sich dabei in vertikaler Richtung über einen wesentlichen Teil der Höhe der Batterie 110.

Im gezeigten Beispiel umfasst die Anlagefläche 220 außerdem einen innenseitigen Anschlag 224, der dem außenseitigen Anschlag 222 in Fahrzeugquerrichtung gegenüberliegt, so dass eine formschlüssige Auffangstruktur für das im Normalbetrieb beabstandet darin aufgenommene vordere Ende 244 der Schutzplanke 240 gebildet ist.

Bei einem Seitenaufprall auf das Fahrzeug, bei dem beispielsweise eine als Pfeil dargestellte Kraft 300 auf die Ladeanschlusseinheit 140 und den Einbaurahmen 210 wirkt, kann es durch Verformung des Einbaurahmens 210 zu einer Annäherung des Einbaurahmens 210 und der Ladeanschlusseinheit 140 an die Batterie 110 und die Steuereinheit 120 kommen. Dabei nähert sich die Anlagefläche 220 der Schutzplanke 240 an und wird schließlich an der Schutzplanke 240 aufgefangen, wobei das vordere Ende 244 der Schutzplatte 240 in die von der Anlagefläche 220 mit dem außenseitigen Anschlag 222 gebildete Auffangstruktur eingreift. Ein Eindringen der Ladeanschlusseinheit 140 in den Bauraum der Steuereinheit 120 kann dadurch verhindert werden. Dies wird weiter dadurch unterstützt, dass die durch die Auskragung 250 gebildete Stützstruktur ein Umbiegen des vorderen Endabschnitts 242 der Schutzplanke 240 in Richtung auf die Steuereinheit 120 verhindert oder begrenzt.

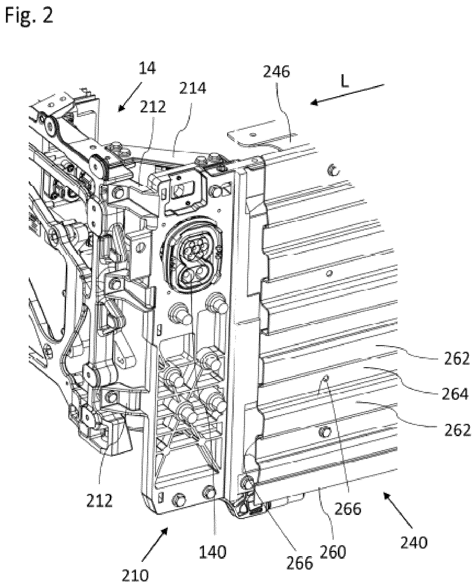

Fig. 2 zeigt schematisch in einer perspektivischen Darstellung den Einbaurahmen 210 und den vorderen Teil der Schutzplanke 240. Dargestellt ist eine plattenförmige Versteifung 246 der Schutzplanke 240 sowie ein außenseitig daran befestigtes Wellprofil 260 der Schutzplanke 240 mit äußeren Profilbereichen 262, inneren Profilbereichen 264 sowie diese verbindenden Profilbereichen 266.

Der Einbaurahmen 210 ist aus Druckguss gefertigt und ist über Streben 212 an dem Halter 14 befestigt. Die Streben 212 sind an ersten Stützpositionen an dem Einbaurahmen 210 angeformt oder befestigt. Sie erstrecken sich im Wesentlichen in Fahrzeugquerrichtung auf den Halter 14 zu. Über eine diagonale Stützstrebe 214 ist der Einbaurahmen zusätzlich an dem Halter 14 abgestützt. Die diagonale Stützstrebe 214 ist an einer zweiten Stützposition an dem Einbaurahmen 210 angebracht. An dem Einbaurahmen 210 sind die ersten Stützpositionen und die zweite Stützposition beispielsweise in Fahrzeuglängsrichtung L voneinander beabstandet. Dadurch wird eine formstabile Abstützung des Einbaurahmens 210 an den Halter 14 erzielt.

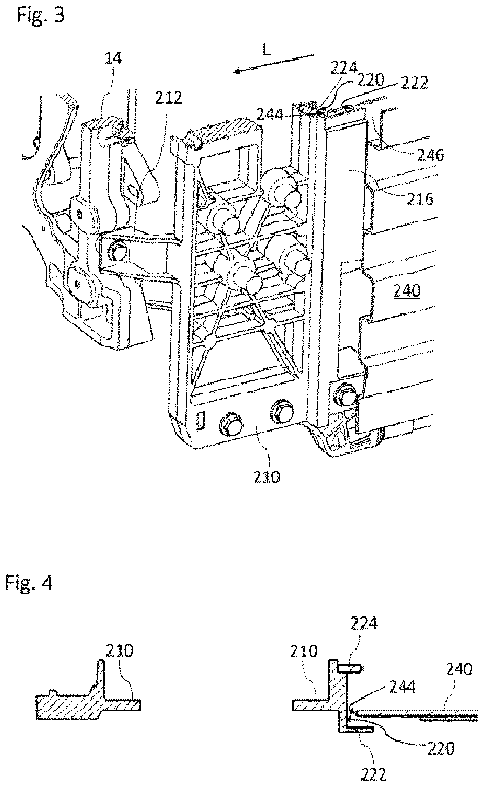

Fig. 3 zeigt in einer Schnittdarstellung perspektivisch und schematisch die Lage des vorderen Endes 244 der Schutzplanke 240 vor der Anlagefläche 220 des Einbaurahmens 210. Das vordere Ende 244 der Schutzplanke 240 wird hier durch das vordere Ende der plattenförmigen Versteifung 246 gebildet. An dem Einbaurahmen 210 ist an der der Schutzplanke 240 zugewandten Seite ein einseitig und an den Enden offenes Profil 216 angeformt, das die Anlagefläche 220 mit dem innenseitigen Anschlag 224 und dem außenseitigen Anschlag 222 bildet.

Fig. 4 zeigt einen Querschnitt durch den Einbaurahmen 210 im Bereich des Einbauraums für die Ladeanschlusseinheit 140 gemäß einem weiteren Ausführungsbeispiel. Wiederum ist das vordere Ende 244 der Schutzplanke 240 in Fahrzeuglängsrichtung beabstandet vor der Anlagefläche 220 des Einbaurahmens angeordnet, in dem von dem äußeren Anschlag 222 und dem inneren Anschlag 224 aufgespannten Raum.

### Bezugszeichen

10 Fahrzeugrahmenträger
12 Rahmenlängsträger
14 Halter
16 Halter
100 Energiespeichersystem
110 Batterie
112 Batteriemodule
120 Steuereinheit
130 Ladeschützeinheit
140 Ladeanschlusseinheit
150 HV-Verteiler
200 Schutzvorrichtung
210 Einbaurahmen
212 Streben
214 Stützstrebe
216 Profil
220 Anlagefläche
222 außenseitiger Anschlag
224 innenseitiger Anschlag
240 Schutzplanke
242 Endabschnitt
244 vorderes Ende
246 Versteifung
250 Auskragung
252 vertikale Platte
254 Versteifungsrippen
260 Wellprofil
262 äußere Profilbereiche
264 innere Profilbereiche
266 verbindende Profilbereiche
300 Kraft

## Patentansprüche

1. Mechanische Schutzvorrichtung eines elektrischen Energiespeichersystems eines Fahrzeugs, umfassend:
eine Schutzplanke (240) für eine Batterie (110) des Energiespeichersystems (100), zum Anordnen an der fahrzeugäußeren Seite der Batterie (110) und sich in Fahrzeuglängsrichtung (L) und vertikal entlang der Batterie (110) erstreckend, die mechanische Schutzvorrichtung wird **gekennzeichnet durch**:
einen Einbaurahmen (210) für eine von der Batterie (110) getrennt angeordnete Ladeanschlusseinheit (140) des Energiespeichersystems (100), zum Anordnen in Fahrzeuglängsrichtung (L) vor einem sich in vertikaler Richtung erstreckenden Ende der Schutzplanke (240) und beabstandet von dem Ende der Schutzplanke (240),
wobei der Einbaurahmen (210) eine Anlagefläche (220) zum Anordnen in Fahrzeuglängsrichtung (L) vor dem Ende (244) der Schutzplanke (240) und entlang des Endes (244) der Schutzplanke (240) aufweist, wobei die Anlagefläche (220) einen außenseitigen, abgewinkelten Anschlag (222) zum außenseitigen beabstandeten Umgreifen des Endes (244) der Schutzplanke (240) aufweist, wobei die Anlagefläche (220) zusammen mit dem außenseitigen Anschlag (222) einen im Querschnitt L-förmigen Bereich der Anlagefläche (220) umfasst.

2. Schutzvorrichtung nach Anspruch 1, wobei der Einbaurahmen (210) einen Einbauraum zum Aufnehmen der Ladeanschlusseinheit aufweist.

3. Schutzvorrichtung nach Anspruch 1 oder 2, wobei die Schutzplanke (240) eine Auskragung (250) aufweist, die eingerichtet ist, bei der Anordnung der Schutzplanke (240) an der fahrzeugäußeren Seite der Batterie (110) in einem über die Batterie (110) hinausragenden Abschnitt (242) der Schutzplanke (240) fahrzeuginnenseitig vor der Batterie (110) vorzustehen.

4. Schutzvorrichtung nach Anspruch 3, wobei die Auskragung eine Verstärkung des über die Batterie (110) hinausragenden Abschnitts (242) der Schutzplanke (240) bildet.

5. Schutzvorrichtung nach einem der vorstehenden Ansprüche, wobei die Anlagefläche (220) ferner einen innenseitigen, abgewinkelten Anschlag (224) für das Ende (244) der Schutzplanke (240) aufweist.

6. Energiespeichersystem für ein Fahrzeug, umfassend eine Batterie (110), eine Ladeanschlusseinheit (140), eine Ladeschützeinheit (130), und eine mechanische Schutzvorrichtung (200) nach einem der vorstehenden Ansprüche,
wobei die Schutzplanke (240) an einer fahrzeugäußeren Seite der Batterie angeordnet ist und sich in Fahrzeuglängsrichtung (L) und vertikal entlang der Batterie erstreckt,
wobei die Ladeanschlusseinheit (140) an dem Einbaurahmen (210) montiert ist und die Ladeschützeinheit eingerichtet ist zur Anordnung fahrzeuginnenseitig von der Ladeanschlusseinheit und beabstandet von der Batterie.

7. Fahrzeugrahmenträger (10) mit einem an dem Fahrzeugrahmenträger montierten Energiespeichersystem (100) und mit einer mechanischen Schutzvorrichtung (200) nach einem der Ansprüche 1 bis 5,
wobei der Fahrzeugrahmenträger (10) einen Rahmenlängsträger (12) und einen Halter (14) oder Kotflügelträger umfasst, der am Rahmenlängsträger (12) befestigt ist,
wobei das Energiespeichersystem (100) eine Batterie (110), eine Ladeanschlusseinheit (140) und eine Ladeschützeinheit (130) umfasst,
wobei die Batterie (110) des Energiespeichersystems an dem Rahmenlängsträger (12) befestigt ist, wobei die Schutzplanke (240) der mechanischen Schutzvorrichtung an einer fahrzeugäußeren Seite der Batterie (110) angeordnet ist und sich in Fahrzeuglängsrichtung (L) und vertikal entlang der Batterie erstreckt,
wobei die Ladeschützeinheit (130) des Energiespeichersystems und der Einbaurahmen (210) der mechanischen Schutzvorrichtung an dem Halter (14) oder Kotflügelträger befestigt sind, wobei die Ladeanschlusseinheit (140) an dem Einbaurahmen (210) montiert ist, wobei die Ladeschützeinheit (130) fahrzeuginnenseitig von der Ladeanschlusseinheit (140) angeordnet ist,
wobei die Batterie (110) getrennt und beabstandet von der Ladeschützeinheit (130), von dem Einbaurahmen (210) und von der Ladeanschlusseinheit (140) angeordnet ist, und
wobei die Anlagefläche (220) des Einbaurahmens (210) in Fahrzeuglängsrichtung (L) beabstandet vor dem Ende (244) der Schutzplanke (240) und entlang des sich in vertikaler Richtung erstreckenden Endes der Schutzplanke angeordnet ist und der außenseitige Anschlag (222) der Anlagefläche (220) beabstandet das Ende (244) der Schutzplanke (240) umgreift.

8. Fahrzeugrahmenträger nach Anspruch 7, wobei das Ende (244) der Schutzplanke (240) in einem von der Anlagefläche (220) des Einbaurahmens (210) mit dem außenseitigen Anschlag (222) aufgespannten Raum angeordnet ist.

9. Fahrzeugrahmenträger nach Anspruch 7 oder 8, wobei der Einbaurahmen (210) zumindest an einer ersten Stützposition des Einbaurahmens an dem Halter (14) oder Kotflügelträger befestigt ist und über wenigstens eine diagonale Stützstrebe (214) an einer zweiten Stützposition des Einbaurahmens an dem Halter (14) oder Kotflügelträger befestigt ist.

10. Fahrzeug mit einem Fahrzeugrahmenträger (10) nach einem der Ansprüche 7 bis 9.

## Claims

1. Mechanical protection device of an electrical energy storage system of a vehicle, comprising:
a protective rail (240) for a battery (110) of the energy storage system (100), for arrangement on the vehicle-outer side of the battery (110) and extending in the vehicle longitudinal direction (L) and vertically along the battery (110), the mechanical protection device being **characterized by**:
an installation frame (210) for a charging connection unit (140) of the energy storage system (100) arranged separately from the battery (110), for arrangement in the vehicle longitudinal direction (L) in front of an end of the protective rail (240) extending in the vertical direction and spaced apart from the end of the protective rail (240),
wherein the installation frame (210) has a contact surface (220) for arrangement in the vehicle longitudinal direction (L) in front of the end (244) of the protective rail (240) and along the end (244) of the protective rail (240), wherein the contact surface (220) has an outer-side, angled stop (222) for engaging around the end (244) of the protective rail (240) in a manner spaced apart from the outer side, wherein the contact surface (220) together with the outer-side stop (222) comprises a region of the contact surface (220) which is L-shaped in cross section.

2. Protection device according to Claim 1, wherein the installation frame (210) has an installation space for receiving the charging connection unit.

3. Protection device according to Claim 1 or 2, wherein the protective rail (240) has a projection (250) which is configured, during the arrangement of the protective rail (240) on the vehicle-outer side of the battery (110), to project in front of the battery (110) on the vehicle-inner side in a section (242) of the protective rail (240) projecting beyond the battery (110).

4. Protection device according to Claim 3, wherein the projection forms a reinforcement of the section (242) of the protective rail (240) projecting beyond the battery (110).

5. Protection device according to one of the preceding claims, wherein the contact surface (220) furthermore has an inner-side, angled stop (224) for the end (244) of the protective rail (240).

6. Energy storage system for a vehicle, comprising a battery (110), a charging connection unit (140), a charging contactor unit (130), and a mechanical protection device (200) according to one of the preceding claims,
wherein the protective rail (240) is arranged on a vehicle-outer side of the battery and extends in the vehicle longitudinal direction (L) and vertically along the battery,
wherein the charging connection unit (140) is mounted on the installation frame (210) and the charging contactor unit is configured for arrangement on the vehicle-inner side of the charging connection unit and spaced apart from the battery.

7. Vehicle frame support (10) having an energy storage system (100) mounted on the vehicle frame support and having a mechanical protection device (200) according to one of Claims 1 to 5,
wherein the vehicle frame support (10) comprises a frame longitudinal member (12) and a holder (14) or fender support which is fastened to the frame longitudinal member (12),
wherein the energy storage system (100) comprises a battery (110), a charging connection unit (140) and a charging contactor unit (130),
wherein the battery (110) of the energy storage system is fastened to the frame longitudinal member (12), wherein the protective rail (240) of the mechanical protection device is arranged on a vehicle-outer side of the battery (110) and extends in the vehicle longitudinal direction (L) and vertically along the battery,
wherein the charging contactor unit (130) of the energy storage system and the installation frame (210) of the mechanical protection device are fastened to the holder (14) or fender support, wherein the charging connection unit (140) is mounted on the installation frame (210), wherein the charging contactor unit (130) is arranged on the vehicle-inner side of the charging connection unit (140),
wherein the battery (110) is arranged separately and spaced apart from the charging contactor unit (130), from the installation frame (210) and from the charging connection unit (140), and
wherein the contact surface (220) of the installation frame (210) is arranged in the vehicle longitudinal direction (L) spaced apart in front of the end (244) of the protective rail (240) and along the end of the protective rail extending in the vertical direction and the outer-side stop (222) of the contact surface (220) engages around the end (244) of the protective rail (240) in a manner spaced apart.

8. Vehicle frame support according to Claim 7, wherein the end (244) of the protective rail (240) is arranged in a space spanned by the contact surface (220) of the installation frame (210) with the outer-side stop (222).

9. Vehicle frame support according to Claim 7 or 8, wherein the installation frame (210) is fastened to the holder (14) or fender support at least at a first supporting position of the installation frame and is fastened to the holder (14) or fender support via at least one diagonal supporting strut (214) at a second supporting position of the installation frame.

10. Vehicle having a vehicle frame support (10) according to one of Claims 7 to 9.

## Revendications

1. Dispositif de protection mécanique d'un système de stockage d'énergie électrique d'un véhicule, comprenant :
une barrière de protection (240) pour une batterie (110) du système de stockage d'énergie (100), destinée à être agencée sur le côté de la batterie (110) situé à l'extérieur du véhicule et s'étendant dans une direction longitudinale du véhicule (L) et verticalement le long de la batterie (110), le dispositif de protection mécanique étant **caractérisé par** :
un châssis de montage (210) pour une unité de raccordement de charge (140) du système de stockage d'énergie (100) séparée de la batterie (110), destiné à être agencé, dans la direction longitudinale du véhicule (L), devant une extrémité de la barrière de protection (240) s'étendant dans une direction verticale et à distance de l'extrémité de la barrière de protection (240),
dans lequel le châssis de montage (210) comporte une surface d'appui (220) destinée à être agencée, dans la direction longitudinale du véhicule (L), avant l'extrémité (244) de la barrière de protection (240) et le long de l'extrémité (244) de la barrière de protection (240), dans lequel la surface d'appui (220) comporte une butée coudée côté extérieur (222) de manière à entourer l'extrémité (244) de la barrière de protection (240) de manière espacée côté extérieur, dans lequel la surface d'appui (220) en association avec la butée côté extérieur (222) comprend une zone de la surface d'appui (220) ayant une section transversale en forme de L.

2. Dispositif de protection selon la revendication 1, dans lequel le châssis de montage (210) comporte un espace de montage pour recevoir l'unité de raccordement de charge.

3. Dispositif de protection selon la revendication 1 ou 2, dans lequel la barrière de protection (240) comporte une saillie (250) qui est configurée pour faire saillie, lorsque la barrière de protection (240) est agencée sur le côté de la batterie (110) situé à l'extérieur du véhicule (240), dans une partie (242) de la barrière de protection (240) devant la batterie (110) sur un côté intérieur du véhicule.

4. Dispositif de protection selon la revendication 3, dans lequel la saillie forme un renfort de la partie (242) de la barrière de protection (240) faisant saillie au-delà de la batterie (110).

5. Dispositif de protection selon l'une des revendications précédentes, dans lequel la surface d'appui (220) comporte en outre une butée coudée côté intérieur (224) pour l'extrémité (244) de la barrière de protection (240).

6. Système de stockage d'énergie pour un véhicule, comprenant une batterie (110), une unité de raccordement de charge (140), une unité de protection de charge (130) et un dispositif de protection mécanique (200) selon l'une des revendications précédentes,
dans lequel la barrière de protection (240) est agencée sur un côté extérieur de véhicule de la batterie et s'étend dans la direction longitudinale du véhicule (L) et verticalement le long de la batterie,
dans lequel l'unité de raccordement de charge (140) est montée sur le châssis de montage (210) et l'unité de protection de charge est configurée pour être agencée sur le côté intérieur du véhicule par rapport à l'unité de raccordement de charge et à distance de la batterie.

7. Support de châssis de véhicule (10) comportant un système de stockage d'énergie (100) monté sur le support de châssis de véhicule et un dispositif de protection mécanique (200) selon l'une des revendications 1 à 5,
dans lequel le support de châssis de véhicule (10) comprend un support longitudinal de châssis (12) et un support (14) ou un support de panneau d'aile qui est fixé au support longitudinal de châssis (12) ;
dans lequel le système de stockage d'énergie (100) comprend une batterie (110), une unité de raccordement de charge (140) et une unité de protection de charge (130),
dans lequel la batterie (110) du système de stockage d'énergie est fixée au support longitudinal de châssis (12), dans lequel la barrière de protection (240) du dispositif de protection mécanique est agencée sur un côté extérieur de véhicule de la batterie (110) et s'étend dans la direction longitudinale du véhicule (L) et verticalement le long de la batterie,
dans lequel l'unité de protection de charge (130) du système de stockage d'énergie et le châssis de montage (210) du dispositif de protection mécanique sont fixés au support (14) ou au support de panneau d'aile, dans lequel l'unité de raccordement de charge (140) est montée sur le châssis de montage (210), dans lequel l'unité de protection de charge (130) est agencée sur le côté intérieur du véhicule par rapport à l'unité de raccordement de charge (140),
dans lequel la batterie (110) est séparée et à distance de l'unité de protection de charge (130), du châssis de montage (210) et de l'unité de raccordement de charge (140), et
dans lequel la surface d'appui (220) du châssis de montage (210) est agencée, dans la direction longitudinale du véhicule (L), devant l'extrémité (244) de la barrière de protection (240) et le long de l'extrémité de la barrière de protection s'étendant dans la direction verticale, et la butée côté extérieur (222) de la surface d'appui (220) entoure l'extrémité (244) de la barrière de protection (240) de manière distante.

8. Support de châssis de véhicule selon la revendication 7, dans lequel l'extrémité (244) de la barrière de protection (240) est agencée dans un espace défini par la surface d'appui (220) du châssis de montage (210) avec la butée coté extérieur (222).

9. Support de châssis de véhicule selon la revendication 7 ou 8, dans lequel le châssis de montage (210) est fixé au support (14) ou au support de panneau d'aile au moins à une première position de support du châssis de montage, et est fixé au support (14) ou au support de panneau d'aile par au moins un montant de support diagonal (214) à une seconde position de support du châssis de montage.

10. Véhicule comportant un support de châssis de véhicule (10) selon l'une des revendications 7 à 9.
